# EUROPÄISCHE PATENTSCHRIFT

(11) **EP 2 589 282 B1**
(45) Veröffentlichungstag und Bekanntmachung des Hinweises auf die Patenterteilung: **14.12.2016**
(21) Anmeldenummer: 12007035.4
(22) Anmeldetag: 11.10.2012
(51) Int. Cl.: A01B 13/08

(54) **Bodenbearbeitungsgerät mit Flügelschar-Grubberzinken**
Soil cultivation device with wing blade grubber tooth
Appareil de traitement de sol avec dents de cultivateur doté d'un soc à ailes

(30) Priorität: 07.11.2011 DE 202011107533 U
(43) Veröffentlichungstag der Anmeldung: 08.05.2013
(73) Patentinhaber: Kerner Maschinenbau GmbH, 89344 Aislingen (DE)
(72) Erfinder: Maucher, Christian, 86513 Ursberg-Mindelzell (DE)
(74) Vertreter: Gallo, Wolfgang

(56) Entgegenhaltungen:
- DE-A1-102005 040 133
- US-A- 3 500 936
- US-A- 4 285 404
- US-A- 4 615 396

## Beschreibung

Die Erfindung betrifft ein Bodenbearbeitungsgerät mit einer Anordnung von Flügelschar-Grubberzinken und einer darauf folgenden Anordnung von Einebnungsorganen, wie beispielsweise Sternradverteilern und Walzensegmenten. Die Anordnung von Flügelschar-Grubberzinken umfasst dabei an drei hintereinander angeordneten beabstandeten Querbalken seitlich gestaffelt angeordnete Flügelschar-Grubberzinken.

Solche Bodenbearbeitungsgeräte, die üblicherweise auch ein höhenverstellbares Fahrwerk aufweisen, sind allgemein bekannt und werden in verschiedenen Versionen angeboten. Ein solches Bodenbearbeitungsgerät ist auch aus einem Firmenprospekt der Anmelderin bekannt.

Die Anordnung der mit Flügelscharen bestückten Grubberzinken erfolgt dabei derart, dass an jedem Querbalken eine Anzahl von Grubberzinken mit gleichen, relativ großen gegenseitigen Abständen angeordnet ist. Bei drei hintereinander angeordneten Querbalken ist dann jeder Grubberzinken des nachfolgenden Querbalkens um jeweils ein Drittel des seitlichen Abstands der Grubberzinken am gleichen Querbalken seitwärts mit Bezug auf einen Grubberzinken am voraus befindlichen Querbalken versetzt. Damit ergeben sich jeweils schräg zur Längsachse des Bodenbearbeitungsgeräts verlaufende Reihen von Grubberzinken. Eine solche Anordnung ist aus der US 3 500 936 bekannt.

Eine solche Anordnung hat den Vorteil, dass mit relativ engen gegenseitigen seitlichen Abständen angeordnete Grubberzinken durch die gestaffelte Anordnung in Längsrichtung des Bodenbearbeitungsgeräts auseinandergezogen angeordnet sind und dabei sich in ihrer Arbeitswirkung sich nicht gegenseitig behindern, d.h., man erhält eine gute Durchgängigkeit der Grubberzinken durch den bearbeiteten Boden.

Allerdings hat diese Anordnung auch einen Nachteil insoweit, als der seitliche Abstand jedes Grubberzinkens von den beiden benachbarten Grubberzinken am voraus befindlichen Balken ungleich ist, nämlich zum einen Grubberzinken am voraus befindlichen Balken halb so groß ist wie zum anderen Grubberzinken am voraus befindlichen Balken, zwischen denen er sich befindet. Das symmetrische Flügelschar an dem betreffenden Grubberzinken wird dadurch ungleichförmig beansprucht, denn mit der einen Seite befindet es sich nahe an der vom mit kleinem seitlichen Abstand voraus befindlichen Grubberzinken erzeugten Furche, mit der anderen Seite aber weiter entfernt von der Furche, die der andere, mit größerem seitlichen Abstand befindliche Grubberzinken am voraus laufenden Balken erzeugt. Deshalb wird das symmetrische Flügelschar auf einer Seite stärker abgenutzt als auf der anderen Seite. Da der Versatz der Grubberzinken an den aufeinander folgenden Balken aber stets nach der selben Seite erfolgt, werden sämliche Flügelschare aller nachfolgender Balken immer auf der gleichen Seite ungleichmäßig abgenutzt, so dass sie ersetzt werden müssen, wenn die eine Seite hinreichend verschlissen ist, obwohl die andere Seite noch ziemlich gut ist.

Ein weiterer Nachteil besteht darin, dass die Staffelung nach einer Seite natürlich immer auch eine erhebliche Querkraft auf das Bodenbearbeitungsgerät zur Folge hat, die in Richtung der Staffelung seitwärts auf das Bodenbearbeitungsgerät wirkt, und die nicht kompensiert wird.

Das Problem stellt sich freilich dann nicht, wenn die Grubberzinken eines nachfolgenden Balkens mittig zwischen den Grubberzinken des voraus befindlichen Balkens angeordnet sind, was aber nur dann möglich ist, wenn die Anordnung auf zwei hintereinander angeordnete Balken beschränkt ist, wie das beispielsweise aus der DE 34 28 011 A1 bekannt ist. Das ist aber auch nicht befriedigend, weil mit nur zwei aufeinander folgenden Balken keine so guten Arbeitsergebnisse erzielbar sind, und bei gleicher Anzahl von Grubberzinken größere Zugkräfte nötig sind, als wenn die Grubberzinken auf drei hintereinander angeordnete Querbalken verteilt sind. Denn bei nur zwei Balken muss der seitliche Abstand der Grubberzinken an jedem Balken bei gleicher Gesamtzahl von Grubberzinken deutlich kleiner sein als bei deren Verteilung auf drei Balken, wo die seitlichen Abstände der Grubberzinken an jedem Balken um die Hälfte größer sein können. Eine symmetrische Anordnung wäre auch bei vier Balken möglich, wo dann auch das Problem der Durchgängigkeit sich nicht stellen würde, allerdings ergibt sich dann eine übermäßig große Baulänge des Geräts insgesamt.

Aus der US-4 615 396, auf welcher der Oberbegriff des Anspruchs 1 beruht, ist eine Anordnung bekannt, bei welcher die in drei aufeinander folgenden Reihen angeordneten Grubberzinken so gestaffelt sind, daß die Staffelung auf der einen Seite der Längsmitte des Bodenbearbeitungsgeräts in Richtung dieser einen Seite und auf der anderen Seite der Längsmitte des Bodenbearbeitungsgeräts die Staffelung nach dieser anderen Seite erfolgt, wobei der seitliche Versatz der Grubberzinken einer nachfolgenden Reihe von denjenigen einer vorausgehenden Reihe jeweils etwa ein Drittel des Grubberzinkenabstands in der vorausgehenden Reihe auf der betreffenden Seite von der Längsmitte des Bodenbearbeitungsgeräts beträgt. Diese bekannte Anordnung vermeidet zwar das Problem, das auftritt, wenn die Grubberzinken in den nachfolgenden Reihen jeweils nach der gleichen Seite versetzt sind, kann aber trotzdem nicht befriedigen. Denn bei diesem bekannten Gerät sind in der ersten Reihe beiderseits der Längsmitte jeweils zwei Grubberzinken vorgesehen, wobei der Abstand zwischen den beiden innenliegenden Grubberzinken etwa das Doppelte des Abstands zwischen diesen und den jeweils benachbarten äußeren Grubberzinken beträgt. In der zweiten Reihe sind dann mittig zwei Grubberzinken nahe nebeneinander angeordnet, und in der dritten Reihe sind zwei zur Längsmitte nächstgelegene Grubberzinken jeweils mittig zwischen zwei Grubberzinken der vorausgehenden zweiten Reihe angeordnet, wobei allerdings der Abstand zwischen ihnen wieder deutlich größer ist als der Abstand zum jeweils nächstbenachbarten Grubberzinken. Allerdings sind dort die Grubberzinken alle nur als einfache schmale bandförmige Federhaken ausgebildet. Die spezifischen Probleme von Flügelschar-Grubberzinken stellen sich dort nicht.

Aufgabe der Erfindung ist es, eine Anordnung von Grubberzinken an einem Bodenbearbeitungsgerät der oben beschriebenen Kategorie zu schaffen, die eine wirtschaftlichere Ausnutzung der symmetrischen Flügelschare ermöglicht.

Diese Aufgabe wird gemäß der im Anspruch 1 angegebenen Anordnung gelöst.

Bei der erfindungsgemäßen Anordnung erfolgt die Staffelung der Grubberzinken an den aufeinander folgenden Balken einerseits der Längsmittelachse des Bodenbearbeitungsgeräts nach der einen Seite und auf der anderen Seite der Längsmittelachse des Bodenbearbeitungsgeräts nach der entgegengesetzten Seite. In dem verbleibenden Mittelbereich, der bei einer solchen Anordnung nicht so mit Grubberzinken bestückt werden kann, dass sich die insgesamt gleichmäßige Verteilung aller Grubberzinken über die Breite des Bodenbearbeitungsgeräts ergibt, ist die im Anspruch 1 vorgesehene besondere Anordnung einiger Grubberzinken vorgesehen.

Die erfindungsgemäße Lösung verhindert zwar nicht die einseitige Abnutzung der symmetrischen Flügelschare, bringt aber in soweit einen ganz erheblichen wirtschaftlichen Vorteil, als die Flügelschare auf der einen Hälfte des Bodenbearbeitungsgeräts auf einer Seite und auf der anderen Hälfte des Bodenbearbeitungsgeräts auf der anderen Seite einseitig abgenutzt werden. Der Benutzer kann also nach einer gewissen Zeit die Flügelschare von der einen Seite des Bodenbearbeitungsgeräts nach dessen anderer Seite umsetzen, so dass auch die andere Seite des jeweiligen Flügelschars abgenutzt wird, bis beide Seiden jedes Flügelschars soweit abgenutzt sind, dass es ersetzt werden muss.

Ein Ausführungsbeispiel der Erfindung wird nachstehend unter Bezugnahme auf die anliegenden Zeichnungen näher im einzelnen beschrieben.

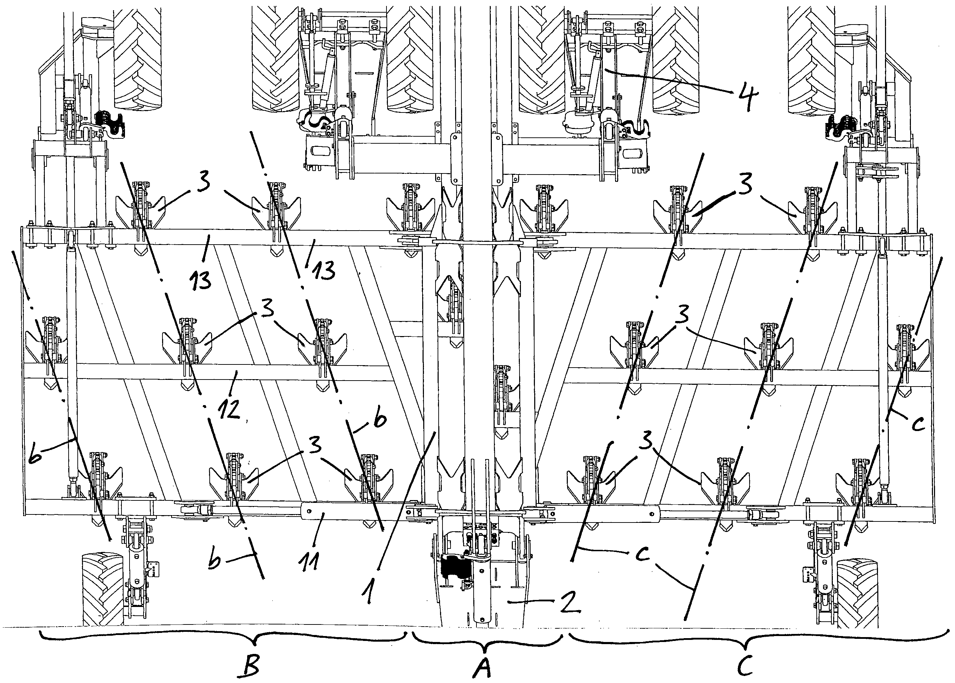

Die Zeichnung zeigt in Draufsicht einen Ausschnitt eines Bodenbearbeitungsgeräts mit einer Anordnung von Flügelschar-Grubberzinken nach der Erfindung.

Das Bodenbearbeitungsgerät weist einen Rahmen 1 auf, an dem vorne eine Deichsel 2 angeordnet ist. Der Rahmen weist drei hintereinander angeordnete Balken 11, 12, 13 auf, die jeweils mit Grubberzinken 3 bestückt sind. Hinter der Grubberzinkenanordnung befindet sich ein Fahrwerk 4. Die weiteren Einzelheiten des Bodenbearbeitungsgeräts sind hier nicht von Interesse.

Wie man aus der Zeichnung sieht, sind die Grubberzinken beiderseits eines Mittelbereichs A in den beiderseits davon liegenden Bereichen B und C symmetrisch zur Längsmitte des Bodenbearbeitungsgeräts angeordnet, wobei die in Längsrichtung des Geräts aufeinander folgenden Grubberzinken an den drei Balken 11, 12 und 13 jeweils auf geraden gedachten Linien b bzw. c liegen, die schräg zur Längsmittelachse des Geräts verlaufen, wobei diese Linien divergieren.

Der seitliche Versatz bzw. die Staffelung der Grubberzinken 3 an den jeweils aufeinander folgenden Balken 11, 12 und 13 in den Bereichen B und C beträgt jeweils ein Drittel des gegenseitigen seitlichen Abstands der Grubberzinken am jeweils gleichen Balken voneinander.

In dem Mittelbereich A sind vier Grubberzinken angeordnet. Zwei davon befinden sich auf dem hintersten, also auf dem dritten Balken 13, und haben voneinander und von den benachbarten Grubberzinken auf diesem hintersten Balken den gleichen, nämlich den normalen seitlichen Abstand, den auch die Grubberzinken auf allen drei Balken in den Bereichen B und C voneinander haben.

Vorderhalb dieser beiden hinteren, auf den Balken 13 angeordneten Grubberzinken des mittleren Bereichs A befinden sich zwei weitere Grubberzinken. Davon ist einer, nämlich der vordere, an einem bezüglich des mittleren, also zweiten Balkens 12, nach vorne versetzten Position, und der hintere an einer bezüglich des mittleren Balkens 12 nach hinten versetzten Position angeordnet. Der Versatz nach vorne bzw. hinten mit Bezug auf den mittleren Balken 12 liegt ungefähr im Bereich eines Drittels der gegenseitigen Abstände der drei Balken 11, 12 und 13 voneinander in Längsrichtung des Geräts.

Die in der Zeichnung dargestellte Anordnung stellt ein Ausführungsbeispiel dar. Möglich ist auch eine Ausführungsform, bei der die erste und die letzte Reihe von Grubberzinken, also die Balken 11 und 13, vertauscht sind. Die sich daraus ergebende Wirkung ist die gleiche.

## Patentansprüche

1. Bodenbearbeitungsgerät mit einer Anordnung von Flügelschar-Grubberzinken (3), die an einem Rahmen (1) des Geräts in drei in Längsrichtung aufeinanderfolgenden, sich über die Arbeitsbreite des Geräts erstreckenden Reihen angeordnet sind, wobei eine Staffelung der Grubberzinken (3) der aufeinanderfolgenden Reihen auf einer Seite der Längsmittelachse des Bodenbearbeitungsgeräts nach der einen Seite und auf der anderen Seite der Längsmittelachse nach der entgegengesetzten Seite erfolgt und die Staffelung an den aufeinanderfolgenden Balken jeweils ein Drittel des seitlichen Abstands der Grubberzinken am jeweils gleichen Balken beträgt,
**dadurch gekennzeichnet,**
**dass** entweder in der ersten oder in der letzten Reihe, alle Grubberzinken (3) dieser Reihe gleiche Abstände voneinander haben,
**dass** die Staffelung von der genannten Reihe aus zur Mittelachse des Geräts hin erfolgt,
**dass** in der mittleren Reihe zwischen den beiden mittleren Grubberzinken der ersten bzw. letzten Reihe zwei Grubberzinken angeordnet sind, die um jeweils ein Drittel des gegenseitigen seitlichen Abstands der Grubberzinken in der ersten bzw. letzten Reihe sowohl voneinander beabstandet sind, als auch gegenüber den beiden mittleren Grubberzinken der ersten bzw. letzten Reihe zur Längsmittelachse hin versetzt angeordnet sind,
und **dass** von diesen beiden Grubberzinken der mittleren Reihe der eine bezüglich der mittleren Reihe nach vorne und der andere nach hinten um jeweils etwa ein Drittel des gegenseitigen Abstands der drei Reihen in Längsrichtung des Bodenbearbeitungsgeräts versetzt angeordnet ist.

2. Bodenbearbeitungsgerät nach Anspruch 1, wobei die Grubberzinkenreihen jeweils an quer über die Arbeitsbreite des Geräts verlaufenden, Bestandteile des Rahmens (1) bildenden Balken (11, 12, 13) angeordnet sind, und die beiden nach vorne bzw. nach hinten versetzten Grubberzinken der mittleren Reihe an bezüglich des mittleren Balkens (12) nach vorne bzw. nach hinten versetzten Balkenelementen angeordnet sind.

## Claims

1. Soil-tilling device having an assembly of wing-share cultivator tines (3) that are arranged on a frame (1) of the device in three rows following each other in the longitudinal direction and extending over the working width of the device, wherein a graduation of the cultivator tines (3) of the sequential rows on one side of the longitudinal central axis of the soil-tilling device is to one side, and on the other side of the longitudinal central axis to the opposing side, and the graduation on the sequential beams is in each case one third of the lateral distance of the cultivator tines on the same beam, respectively,
**characterized in that**
either in the first or in the last row all the cultivator tines (3) of this row have equal distances between each other,
that the graduation is starting from said row towards the central axis of the device,
that, in the middle row, two cultivator tines are arranged between the two middle cultivator tines of the first and last row, which in each case are both spaced from each other by a third of the mutual lateral distance of the cultivator tines in the first and the last row, as well as arranged offset from the two middle cultivator tines of the first and last row towards the longitudinal central axis,
and that one of these two cultivator tines of the middle row is arranged towards the front, and the other one towards the back, with respect to the middle row, in each case with an offset of about a third of the mutual distance of the three rows in the longitudinal direction of the soil-tilling device.

2. Soil-tilling device according to claim 1, wherein the rows of cultivator tines in each case are arranged on beams (11, 12, 13) extending transversely over the working width of the device and forming integral parts of the frame (1), and the two cultivator tines of the middle row that are offset towards the front and towards the back are arranged on beam elements that are offset towards the front and towards the back with respect to the middle beam (12), respectively.

## Revendications

1. Dispositif de travail du sol avec un agencement des dents de cultivateur (3) à socs à ailettes, les dents étant agencées au niveau d'un cadre (1) du dispositif en trois rangées successives dans la direction longitudinale et s'étendant à travers la largeur de travail du dispositif, dans lequel un échelonnement des dents de cultivateur (3) des rangées successives sur un côté de l'axe central longitudinal du dispositif de travail du sol est décalé vers l'un côté, et sur l'autre côté de l'axe central longitudinal vers le côté opposé, et l'échelonnement au niveau des barres successives est en chaque cas un tiers de la distance latérale des dents de cultivateur, en chaque cas au niveau de la même barre,
**caractérisée en ce que,**
soit dans la première rangée, soit dans la dernière rangée, toutes les dents de cultivateur (3) de cette rangée présentent les mêmes distances entre elles,
**en ce que** l'échelonnement s'effectue à partir de ladite rangée vers l'axe central du dispositif,
**en ce que**, dans la rangée centrale, et respectivement entre les deux dents centrales de cultivateur de la première et dernière rangée, sont disposées deux dents de cultivateur qui sont en chaque cas espacées l'une de l'autre par un tiers de leurs distance mutuelle latérale, aussi que décalées vers l'axe central longitudinal par rapport aux dents centrales de cultivateur respectives de la première et dernière rangée,
et **en ce que** l'une de ces deux dents de cultivateur de la rangée centrale est disposée vers l'avant, et l'autre vers l'arrière, en chaque cas de manière décalée d'environ par un tiers de la distance mutuelle des trois rangées dans la direction longitudinale du dispositif de travail du sol.

2. Dispositif de travail du sol selon la revendication 1, dans lequel les rangées des dents de cultivateur sont en chaque cas disposées au niveau des barres (11, 12, 13) s'étendant à travers la largeur de travail du dispositif et formant des composants du cadre (1), et les deux dents de cultivateur de la rangée centrale respectivement décalées vers l'avant et vers l'arrière sont disposées au niveau des éléments de barre décalées vers l'avant et vers l'arrière par rapport à la barre centrale (12).
